# EUROPEAN PATENT SPECIFICATION

(11) **EP 4 576 855 B1**
(45) Date of publication and mention of the grant of the patent: **14.10.2026**
(21) Application number: 23872819.0
(22) Date of filing: 29.08.2023
(51) Int. Cl.: H04W 12/082, H04W 12/30, H04W 12/69, H04L 9/32

(54) **METHOD AND DEVICE FOR MANAGING USER AGREEMENT INFORMATION IN MOBILE COMMUNICATION SYSTEM**
VERFAHREN UND VORRICHTUNG ZUR VERWALTUNG VON BENUTZERVEREINBARUNGSINFORMATIONEN IN EINEM MOBILKOMMUNIKATIONSSYSTEM
PROCÉDÉ ET DISPOSITIF DE GESTION D'INFORMATIONS D'ACCORD D'UTILISATEUR DANS UN SYSTÈME DE COMMUNICATION MOBILE

(30) Priority: 28.09.2022 KR 20220123429; 31.10.2022 KR 20220142584
(43) Date of publication of application: 25.06.2025
(73) Proprietor: Samsung Electronics Co., Ltd., Suwon-si, Gyeonggi-do 16677 (KR)
(72) Inventor: CHOI, Hongjin, Suwon-si, Gyeonggi-do 16677 (KR); LEE, Duckey, Suwon-si, Gyeonggi-do 16677 (KR)
(74) Representative: Gulde & Partner
(86) International application number: PCT/KR2023/012741
(87) International publication number: WO 2024/071697

(56) References cited:
- WO-A1-2022/149874
- KR-A- 20200 083 498
- XIAOMI: "KI1, New Sol User authorization revocation for API invocation procedure", vol. SA WG3, no. e-meeting; 20220822 - 20220826, 16 August 2022 (2022-08-16), XP052271156, Retrieved from the Internet <URL:https://ftp.3gpp.org/tsg_sa/WG3_Security/TSGS3_108e/Docs/S3-222244.zip S3-222244_KI1,New Sol User authorization revocation for API invocation procedure.doc> [retrieved on 20220816]
- "3 rd Generation Partnership Project; Technical Specification Group Services and System Aspects; Security architecture and procedures for 5G system (Release 17)", no. 20220301, 22 March 2022 (2022-03-22), XP052128805, Retrieved from the Internet <URL:https://ftp.3gpp.org/tsg_sa/WG3_Security/TSGS3_106e/SA_95/33501-h50.doc> [retrieved on 20220322]
- SAMSUNG: "New Solution on User Authorization in API Invocation", vol. SA WG3, no. e-meeting; 20221010 - 20221014, 3 October 2022 (2022-10-03), XP052271763, Retrieved from the Internet <URL:https://ftp.3gpp.org/tsg_sa/WG3_Security/TSGS3_108e-AdHoc/Docs/S3-222854.zip S3-222854-New Solution on Resource Owner Authorization in API Invocation.docx> [retrieved on 20221003]
- XIAOMI: "KI1, New Sol User authorization revocation for API invocation procedure", 3GPP TSG-SA3 MEETING #108E, S3-222244, 16 August 2022 (2022-08-16), XP052271156
- XIAOMI: "KI1, New Sol AKMA based UE authentication for API invoker on-boarding procedure in SNA scenarios", 3GPP TSG-SA3 MEETING #108E, S3-222240, 16 August 2022 (2022-08-16), XP052271152
- SAMSUNG: "New Solution on User Authorization in API Invocation", 3GPP TSG-SA3 MEETING #108E-ADHOC, S3-222854, 3 October 2022 (2022-10-03), XP052271763

## Description

### [Technical Field]

The disclosure relates to a wireless communication system (or mobile communication system). More specifically, the disclosure relates to a method and a device wherein, in case that a specific application server wants to access a user's resource in a wireless communication system (or mobile communication system), authorization from the user is identified, and the authorization is managed (provided or revoked) according to the user's determination.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.
In XIAOMI, S3-222244 titled "KI1, New Sol User authorization revocation for API invocation procedure*",* a procedure for a user to revoke a previously granted authorization by sending a revocation request from a user equipment (UE) to a network function is discussed. In 3GPP TS 33.501, general security architecture and procedures for 5G systems, including the use of token-based authorization frameworks for network functions is discussed.

### [Disclosure of Invention]

### [Technical Problem]

The disclosure may propose a scheme for managing user information, such as providing or revoking user agreement information with regard to a request for accessing user resources in a mobile communication system.

### [Solution to Problem]

The present invention is defined by the appended set of claims. According to various embodiments of the disclosure, a method performed by a user equipment in a wireless communication system according to the disclosure includes: receiving a user authentication request for an API invocation from a first network entity; generating a first token for authentication regarding the API invocation; transmitting the first token to the first network entity in response to the user authentication request; generating a first revocation token for revoking the first token; and transmitting the first revocation token to a second network entity, wherein the first revocation token includes information on a generation time of the first revocation token.

A method performed by a network entity according to the disclosure includes: generating a first token for authentication regarding an API invocation from an API invoker; receiving a first revocation token for revocation of the first token; and revoking the first token, based on the first revocation token, wherein the first revocation token includes information on a generation time of the first revocation token.

### [Advantageous Effects of Invention]

According to various embodiments of the disclosure, in order to block indiscriminate access to resources related to a user in a mobile communication system, it is possible to provide access to a UE's resources only to an API invoker authorized by the user. Accordingly, it is possible to efficiently provide services optimized to the user while guaranteeing safety against threats that may damage the user.

### [Brief Description of Drawings]

FIG. 1 illustrates a common application program interface (API) framework (CAPIF) architecture according to an embodiment of the present disclosure.
FIG. 2 is a flowchart illustrating processes in which a user provides or revokes agreement information according to an embodiment of the present disclosure.
FIG. 3 is a flowchart illustrating processes in which a user provides or revokes agreement information according to an embodiment of the present disclosure.
FIG. 4 is a flowchart illustrating processes in which a user provides or revokes agreement information according to an embodiment of the present disclosure.
FIG. 5 is a flowchart illustrating processes in which a user provides or revokes agreement information according to an embodiment of the present disclosure.
FIG. 6 is a flowchart illustrating processes in which a user provides or revokes agreement information according to an embodiment of the present disclosure.
FIG. 7 illustrates an example of obtaining a key used to generate a token used to manage the user's authorization according to an embodiment of the present disclosure.
FIG. 8 illustrates a structure of a base station according to an embodiment of the disclosure.
FIG. 9 illustrates a structure of a UE according to an embodiment of the disclosure.
FIG. 10 illustrates a structure of a network entity according to an embodiment of the disclosure.

### [Mode for the Invention]

Hereinafter, various embodiments of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

The following detailed description of embodiments of the disclosure is mainly directed to New RAN (NR) as a radio access network and Packet Core (5G system or 5G core network or next generation core (NG Core)) as a core network in the 5G mobile communication standards specified by the 3rd generation partnership project (3GPP) that is a mobile communication standardization group, but based on determinations by those skilled in the art, the main idea of the disclosure may be applied to other communication systems having similar backgrounds through some modifications without significantly departing from the scope of the disclosure.

In the following description, terms for identifying access nodes, terms referring to network entities or network functions, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description, a base station is an entity that allocates resources to terminals, and may be at least one of an eNode B (eNB), a Node B, a radio access network (RAN), an access network (AN), an RAN node, an NR NB, a gNB, a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description of embodiments of the disclosure, an LTE or LTE-A-based system will be described by way of example, but the embodiments of the disclosure may be applied to other communication systems having similar backgrounds or channel types. In addition, based on determinations by those skilled in the art, the embodiments of the disclosure may also be applied to other communication systems through some modifications without significantly departing from the scope of the disclosure.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a terminal (or UE) transmits data or control signals to a base station (or eNB or gNB), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, e MBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also require a packet error rate of 10-5 or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above-described mMTC, URLLC, and eMBB are merely examples of different types of services, and service types to which the disclosure is applied are not limited to the above examples.

Furthermore, in the following description, LTE, LTE-A, LTE Pro, 5G (or NR), or 6G systems will be described by way of example, but the embodiments of the disclosure may also be applied to other communication systems having similar technical backgrounds or channel types. In addition, based on determinations by those skilled in the art, the embodiments of the disclosure may be applied to other communication systems through some modifications without significantly departing from the scope of the disclosure.

As described above, it has become possible to provide UEs with various services in line with development of mobile communication systems. In order to provide a UE with an optimal service according to the UE's position, state, or the like, the application programming interface (API) invoker (for example, application server) needs to access the UE's resources. However, if API invokers access the UE's resources without the user's authorization, unexpected damaged may be inflicted on the user (for example, receiving the UE's position information may be followed by the user's privacy infringement, and requesting 3GPP systems to change the quality of service (QoS) with regard to corresponding application traffic may require billing unexpected by the user), and strict handling is thus necessary. Therefore, there is a need for control methods wherein API invokers authorized by the user are allowed to access the UE's resources only for a period of time intended by the user, and API invokers not authorized by the user are denied access to the UE's resources which is likely to inflict damage to the user.

There is a need for a method wherein, in order to prevent an API invoker having no authorization to request a 3GPP system to provide the user's resource without the user's authorization, the user authorizes use of the UE's resources by using an application, and the 3GPP system determines whether the user actually has authorized the same, and there is a need for a method wherein the user can later manage the API invoker's right to access the UE's resources as desired (for example, the previous authorization is revoked according to the user's decision).

In addition, there is a need for methods for identifying whether an API invoker who requests the UE's resources has been authorized by the user in a mobile communication system, and these methods need a method wherein, with regard to the API invoker's request for authorization, the approval for access to the UE's resources is counterfeited or falsified.

According to various embodiments of the disclosure, a UE may receive an API invoker's request for use of the UE's resources in a mobile communication system. In case that the user authorizes such a request, the UE may issue a token to the API invoker, the token including the API invoker's information which may be used to identify the API invoker (for example, the API invoker's ID), the name of a service API which may be used by the API invoker to invoke the 3GPP system, an ID (for example, AKMA key identifier (A-KID)) related to a key which may be used to receive the UE's ID for identifying the UE in the 3GPP system and a key related to the user's authorization from the 3GPP system, the timepoint at which authorization is valid, the token generation time, and the like. The token issued by the user may be subjected to processing such as encryption, protection against counterfeit and falsification, electronic signature, or the like through an encryption key shared or coordinated with the mobile communication system in advance such that the API invoker cannot counterfeit or falsify the same.

Upon receiving the token, the API invoker may send a request for accessing the UE's resources to the mobile communication system, including the token. Upon receiving the request, the mobile communication system may identify whether the API invoker that has made the request is allowed to access the UE's resources, for example, by using the token included in the API invoker's request. Upon identifying that the request is a legitimate request authorized by the user, the mobile communication system may provide the API invoker with a response to the request for accessing the UE's resources. In case that the token included in the request for accessing the UE's resources is not a legitimate token, the time to use authorized by the token has expired, or the user has requested revocation of the token, the mobile communication system may refuse the access to the UE's resources requested by the API invoker.

The user may determine to revoke already authorized information by using a resource owner client which operates as an application client. In this case, the UE generates a revocation token and transfers the same to the mobile communication system. The mobile communication system may verify the token and, if the verification succeeds, may notify the API invoker of revocation of the authorized token. If the revocation token verification fails, a token verification failure message may be sent to the UE, and the resource owner client may inform the user, based thereon.

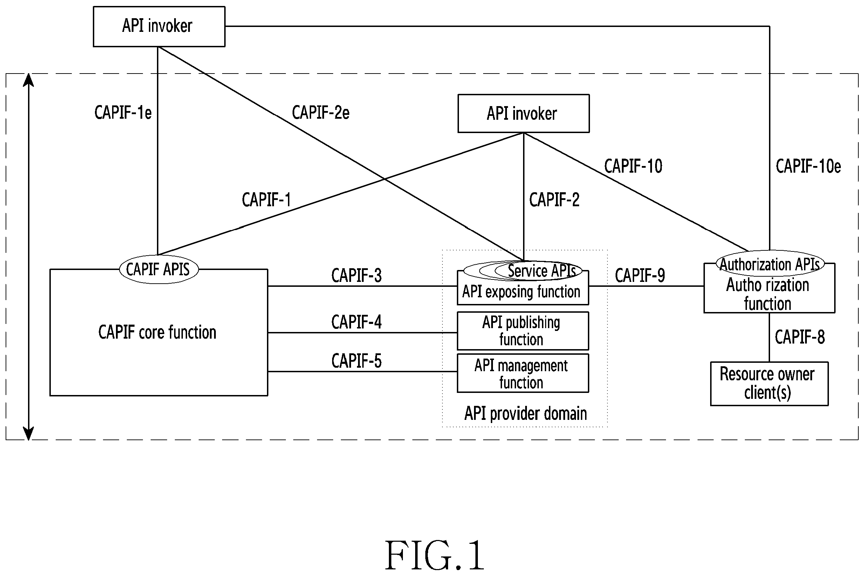

The unit in which each function provided by a 5G network system is performed may be defined as a network function (NF) (or network entity). FIG. 1 illustrates an example of a 5G mobile communication network.

FIG. 1 illustrates a common API framework (CAPIF) architecture according to an embodiment of the present disclosure.

As illustrated in FIG. 1, network entities in the API provider domain interact with the CAPIF core function. The CAPIF core function in a public land mobile network (PLMN) trust domain supports services APIs. As illustrated in FIG. 1, API invokers may exist inside the PLMN trust domain, inside a 3^{rd} party trust domain, or outside the PLMN trust domain and the 3^{rd} party trust domain.

API invokers in the PLMN trust domain interact with the CAPIF core function through CAPIF-1, invoke services APIs in the PLMN trust domain through CAPIF-2, and invoke services APIs in the 3^{rd} party trust domain through CAPIF-2e. API invokers in the 3^{rd} party trust domain interact with the CAPIF core function through CAPIF-1e, invoke services APIs in the PLMN trust domain through CAPIF-2e, and invoke services APIs in the 3^{rd} party trust domain through CAPIF-2.

API invokers outside the PLMN trust domain and the 3^{rd} party trust domain interact with the CAPIF core function through CAPIF-1e, and invoke services APIs in the 3^{rd} party trust domain and service APIs in the PLMN trust domain through CAPIF-2e.

In an embodiment, the API exposing function (which may be, for example, a network exposure function (NEF) or an NF capable of providing the API), the API publishing function, and the API management function in the PLMN trust domain interact with the CAPIF core function through CAPIF-3, CAPIF-4, and CAPIF-5, respectively.

CAPIF-3 and CAPIF-4 interfaces enable service APIs to interact with the CAPIF core function the API publishing function. CAPIF-3 and CAPIF-4 interfaces support the following functions:
1. Service API information may be published in the API registry such that applications can find service APIs.
2. Application authentication may be identified during a service API invocation.
3. Authorization to access a service API may be received from the CAPIF core function.
4. The CAPIF core function may be informed of API lifecycle management, for example, beginning or suspension of a service API.
5. API events, for example, a change in position of an application that invokes a service API, or faults of the service API, may be reported to the CAPIF core function.
6. API monitoring events, for example, load or the amount of resource usage, may be reported to the CAPIF core function.
7. Service API invocation events may be logged in CAFF, for example, invoker ID, IP address, service API name, version, input parameters, invocation result, timestamp.
8. Accounting records generated from a service API invocation may be reported to the CAPIF core function.
9. Policies by which API providers are configured in service APIs may be enacted.

The interaction between the API management function and the CAPIF core function is expressed by CAPIF-5 interface.

CAPIF-5 interface enables an API provider to interact with the CAPIF core function for the API management function. CAPIF-5 interface supports the following functions:
1. An API provider may configure blocking of API invocations for a specific period of time regardless of policies, for example, API invocation limitation, whether API invocations are authorized during roaming or not.
2. Service APIs' access control list may be configured for each application.
3. Service API invocation event logs may be accessed, and the log storage time may be configured.
4. The CAPIF core function may request the approval of new application registration, and may identify successful registration.
5. The API provider may update application profile information stored in the database.
6. The API provider may manage the service APIs' lifecycle state.
7. The API provider may notify service API events, for example, a service API' faults, a change in position of an application invocation API, FHEM, the amount of resource usage, accounting records.

The API exposing function communicates with the CAPIF core function to perform at least one of service APIs' access control, data logging, accounting, authentication, and authorization through CAPIF-3 interface.

The API publishing function publishes at least one service API to the CAPIF core function in the PLMN domain through CAPIF-4. The API publishing function is a logical entity which supports service APIs so as to interact with the CAPIF core function and, in some cases, receives a service API-related management command from the API management function. Logical entities are also referred to as framework control agents or framework control functions, and may be arranged physically as service APIs or standalone entities.

The API management function communicates with the CAPIF core function in the PLMN domain so as to perform at least one of access monitoring through CAPIF-5, policy configuration, and API invoker clients' provisioning. In addition, the API management function enables API providers to read and write API management information with the CAPIF core function, and enables API providers to provide management commands to service APIs through the API publishing function.

The communication between the API exposing function and the CAPIF core function, the communication between the API publishing function and the CAPIF core function, and the communication between the API management function and the CAPIF core function may be API-based communication through CAPIF-3, CAPIF-4, and CAPIF-5, respectively.

The resource owner client is an application client which the UE' user may use, and may communication with an authorization function through CAPIF-8. The authorization function may receive a token verification request from an API invoker through CAPIF-9, may return the verification result, may receive a token revocation request received from the resource owner client through CAPIF-8, and may notify the API exposing function thereof through CAPIF-9.

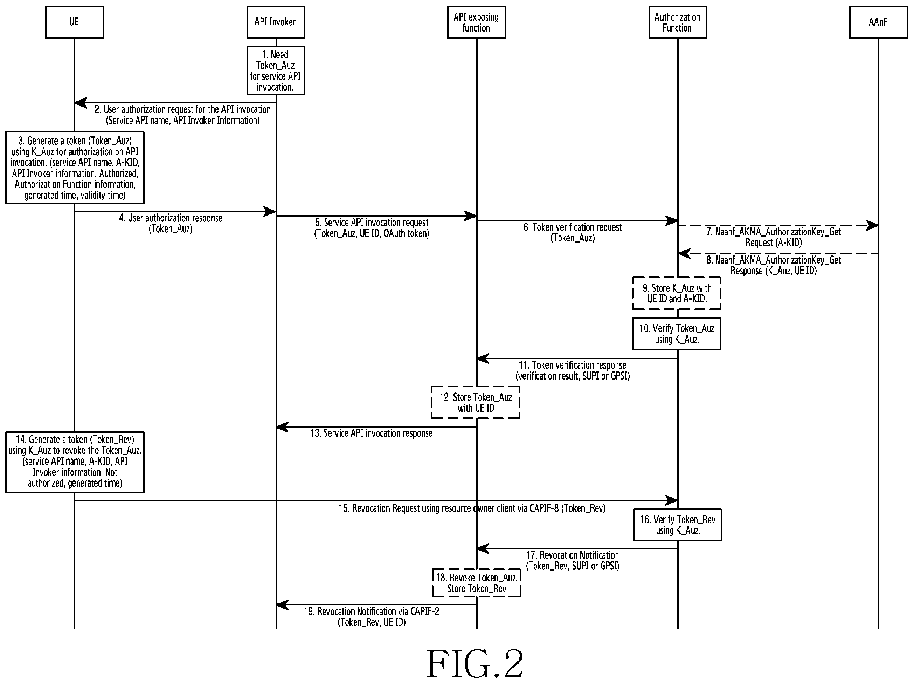

FIG. 2 is a flowchart illustrating processes in which a user provides or revokes agreement information according to an embodiment of the present disclosure.

For the procedure illustrated in FIG. 2, at least one of the following configurations may be performed in advance.

### First pre-configuration (A1)

Information needed by the user to access the authorization function through the resource owner client of the UE (the information may include, for example, the authorization function's address, information for forming secure communication with the authorization function, and the like) may be provided to the UE in advance (for example, there may be a method in which the information is provided to the UE during a registration process, or the operator provides the information in the USIM in advance).

### Second pre-configuration (A2)

An API invoker may know in advance whether the user's authorization information is necessary when invoking a specific API. For example, the API invoker may be informed by an API provider operator whether the user's authorization information is necessary when invoking a specific API when making a contract with the API provider operator, and field "partially authorized" may be added to an OAuth token provided by the CAPIF core function such that the API invoker knows that the user's authorization information is necessary if an API that the API invoker wants to invoke is in the OAuth token's field "partially authorized."

Referring to FIG. 2, in step 1, the API invoker may know that the user's authorization information is necessary to invoke an API by means of the second pre-configuration (A2).

In step 2, the API invoker may transmit a user authorization request regarding the corresponding API invocation, which includes the name of the API to be invoked and information of the API invoker (which may be, for example, an ID indicating the API invoker), to the UE.

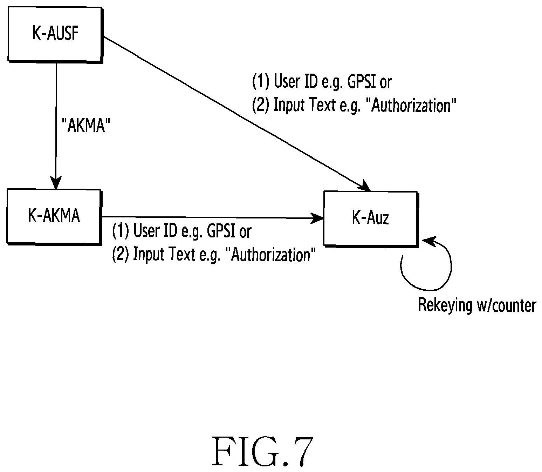

In step 3, the UE which has received the user authorization request may output corresponding content of the UI of the UE or the UI of the application, and the user may determine whether or not to authorize the content. If the user has authorized, the UE may generate an authorization token (Token_Auz) by using an authorization key (K_Auz). The detailed method for calculating K_Auz will be described later with reference to FIG. 7. The token's claim may include at least one from among the name of the API to be invoked, information of the API invoker, AKMA key identifier (A-KID), "authorization," the time of generation of the token, the token's validity time, or information of the authorization function (which may include, for example, the address of the authorization function). The UE may generate token verification information by using the token's claims and K_Auz as input values. The token verification information may be information such as signature information or a message authentication code. If the UE has generated a token according to the user's authorization, the UE may transmit necessary information such as the API name and information of the API invoker to the resource owner client, and the resource owner client may store such information.

In step 4, if the UE has generated Token_Auz according to the user's authorization in step 3, the UE may transmit the Token_Auz to the API invoker in response to the request of the API invoker in step 2. If the UE has not generated Token_Auz in step 3 due to the absence of the user's authorization, the UE may transmit a message or information for rejecting the request.

In step 5, the API invoker may present Token_Auz, the UE's ID (the UE's ID may be a UE ID on the application layer, a generic public subscription identifier (GPSI), or a subscription permanent identifier (SUPI)), or OAuth token so as to transmit an API invocation request to the API exposing function. The OAuth token is a token provided from the CAPIF core function to the API invoker, and may include API information indicating that the corresponding API invoker has been authorized to invoke. In addition, the OAuth token may have field "partially authorized" added thereto according to the second pre-configuration (A2).

In step 6, the API exposing function may verify the OAuth token so as to primarily identify whether the corresponding API invoker is authorized to invoke an API. If the API invoker has invoked an API that requires the user's authorization (this may be recognized by the second pre-configuration), the API exposing function may identify whether the invocation includes Token_Auz which includes the user's authorization information. If the API invoker has sent no Token_Auz in connection with invoking an API that requires the user's authorization, or if the API invoker has sent the same including invalid Token_Auz, the API exposing function may reject the API invocation request. If the API invoker has sent the Token_Auz, the API exposing function may transmit a token verification request to the authorization function through CAPIF-9 interface. The process in which the API invoker searches for the authorization function may be performed based on authorization function information included in the Token_Auz.

In step 7, if the authorization function has no K_Auz that matches with the A-KID in the Token_Auz claim, the authorization function may request the AAnF to provide the K_Auz. The authorization function may use a Naanf_AKMA_AuthorizationKey_Get request service in this regard, and may use the A-KID as an input value. The authorization function may find the AAnF by using the A-KID. If the API exposing function is outside the PLMN trust domain, the authorization function may transmit a GPSI request indication together with the K_Auz request.

In step 8, the AAnF may transmit the K_Auz and the UE ID (which may include SUPI and, selectively, GPSI) to the authorization function in response to the Naanf_AKMA_AuthorizationKey_Get request.

In step 9, the authorization function may store the K_Auz and UE ID received from the AAnF together with the A-KID. In case that a token verification request is later received from the API exposing function, and in case that the A-KID in the token claim is stored therein, the authorization function may verify the token by using the key (K_Auz) that matches therewith. In such a case, the authorization function may have no need to send a K_Auz key request to the AAnF.

In step 10, the authorization function may verify the token by using the K_Auz that matches with the A-KID in the token claim.

In step 11, the authorization function may transmit a token verification response to the API exposing function. If the verification is successful, the authorization function may also transmit the UE's ID (SUPI or GPSI) which may be used in a 3GPP system.

In step 12, if the API exposing function has received a token verification success response, the same may store the K_Auz together with the UE's ID which may be used in a 3GPP system. The UE ID may further include the UE's ID received from the API invoker in step 5. Thereafter, in case that the API exposing function has received an API invocation request including the corresponding Token_Auz from the API invoker, the API exposing function may perform an API invocation response, based on the stored Token_Auz, without sending a token verification request to the authorization function.

In step 13, the API exposing function may transmit an API invocation response to the API invoker according to whether the token verification is successful or not. The transmitted response may include a UE's ID such that the API invoker finds an appropriate UE. The UE's ID may be the UE ID of the application layer received in step 5, or may be GPSI or SUPI.

In step 14, if the user wants to revoke already authorized information, the user may revoke the same through the resource owner client. The resource owner client may store information which the user has authorized through the UE, and the user may revoke authorized information through the corresponding client (for example, such a process may be performed by the user's determination to select "revoke" through the resource owner client). If the user has requested revocation through the resource owner client, the UE may generate a revocation token (Token_Rev). The revocation token's claim may include information such as the API name, A-KID, the API invoker's information, "not authorized," and time of generation. Token verification information may be generated by using the token's claim and K_Auz as input values similarly to step 3.

In step 15, the generated Token_Rev may be transferred from the UE's resource owner client to the authorization function. CAPIF-8 interface may be used in this case.

In step 16, the authorization function may verify the Token_Rev by using the K_Auz. In case that the authorization function has no K_Auz that matches with the A-KID included in the Token_Rev, the key and UE ID may be received from the AAnF in the same method as in step 7 and step 8.

In step 17, the authorization function may transfer the token verification result to the API exposing function. The revocation notification transmitted by the authorization function may include the UE's ID (SUPI or GPSI) which may be used to determine the UE in the 3GPP system.

In step 18, in case that the API exposing function has received a Token_Rev from the authorization function, the API exposing function may revoke the Token_Auz stored in step 12. The API exposing function may find the Token_Auz stored in step 12 solely in connection with information such as the UE ID received in step 17, the API name in Token_Rev, and information of the API invoker. After finding the Token_Auz, the API exposing function may compare the token generation time included in the Token_Auz and that included in the Token_Rev. If the Token_Auz has been generated prior to the Token_Rev, the API exposing function may revoke the Token_Auz. If the Token_Rev has been generated prior to the Token_Auz, the API exposing function may not revoke the Token_Auz. If the Token_Auz has been revoked, the API exposing function may delete the Token_Auz and may store the Token_Rev together with the UE ID. If the API invoker requests an API invocation by using the Token_Auz generated prior to the Token_Rev stored in the API exposing function, the API exposing function may indicate that the Token_Auz is invalid and may reject the API invocation request.

In step 19, the API exposing function may notify the API invoker of token revocation. The token revocation notification from the API exposing function may include the UE's ID received from the API invoker received in step 5. Upon receiving the token revocation notification, the API invoker should not use the previously generated Token_Auz, and may perform steps 1-13 described with reference to FIG. 2 if a later API invocation is necessary.

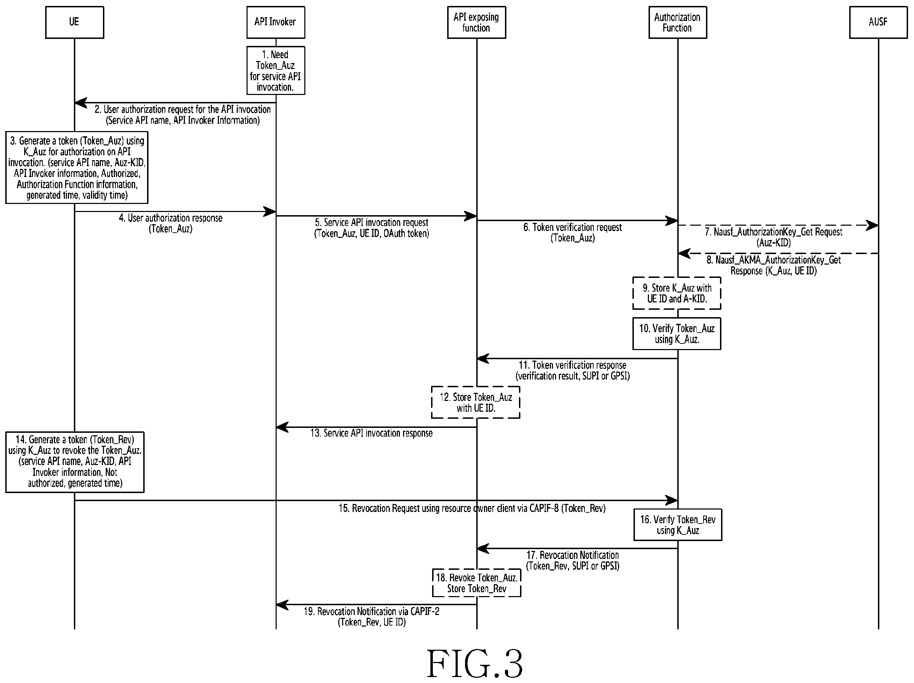

FIG. 3 is a flowchart illustrating processes in which a user provides or revokes agreement information according to an embodiment of the present disclosure.

For the procedure illustrated in FIG. 3, at least one of the following configurations may be performed in advance.

### First pre-configuration (B1)

Information needed by the user to access the authorization function through the resource owner client of the UE (the information may include, for example, the authorization function's address, information for forming secure communication with the authorization function, and the like) may be provided to the UE in advance (for example, there may be a method in which the information is provided to the UE during a registration process, or the operator provides the information in the USIM in advance).

### Second pre-configuration (B2)

The authentication server function (AUSF) may transfer its address information to the UE after the authentication process is completed, and the AUSF and the UE may generate an authorization-temporary ID (Auz-TID) by using the UE's ID (for example, SUPI) and a key (for example, K_ausf) such that the authentication function can fine the K_Auz and the AUSF which owns the UE's key. The AUSF and the UE may generate an authorization key identifier (Auz-KID) by using the Auz-TID, the AUSF's address, and the UE's home network identifier.

### Third pre-configuration (B3)

The API invoker may know in advance whether the user's authorization information is necessary when invoking a specific API. For example, the API invoker may be informed by an API provider operator whether the user's authorization information is necessary when invoking a specific API when making a contract with the API provider operator, and field "partially authorized" may be added to an OAuth token provided by the CAPIF core function such that the API invoker knows that the user's authorization information is necessary if an API that the API invoker wants to invoke is in the OAuth token's field "partially authorized."

Referring to FIG. 3, in step 1, the API invoker may know that the user's authorization information is necessary to invoke an API by means of the third pre-configuration (B3).

In step 2, the API invoker may transmit a user authorization request regarding the corresponding API invocation, which includes the name of the API to be invoked and information of the API invoker (which may be, for example, an ID indicating the API invoker), to the UE.

In step 3, the UE which has received the user authorization request may output corresponding content of the UI of the UE or the UI of the application, and the user may determine whether or not to authorize the content. If the user has authorized, the UE may generate an authorization token (Token_Auz) by using an authorization key (K_Auz). The detailed method for calculating K_Auz will be described later with reference to FIG. 7. The token's claim may include at least one from among the name of the API to be invoked, information of the API invoker, the Auz-KID (the ID of the key generated in the second pre-configuration), "authorization," the time of generation of the token, the token's validity time, or information of the authorization function (which may include, for example, the address of the authorization function). The UE may generate token verification information by using the token's claims and K_Auz as input values. The token verification information may be information such as signature information or a message authentication code. If the UE has generated a token according to the user's authorization, the UE may transmit necessary information such as the API name and information of the API invoker to the resource owner client, and the resource owner client may store such information.

In step 4, if the UE has generated Token_Auz according to the user's authorization in step 3, the UE may transmit the Token_Auz to the API invoker in response to the request of the API invoker in step 2. If the UE has not generated Token_Auz in step 3 due to the absence of the user's authorization, the UE may transmit a message or information for rejecting the request.

In step 5, the API invoker may present Token_Auz, the UE's ID (the UE's ID may be a UE ID on the application layer, a GPSI, or a SUPI), or OAuth token so as to transmit an API invocation request to the API exposing function. The OAuth token is a token provided from the CAPIF core function to the API invoker, and may include API information indicating that the corresponding API invoker has been authorized to invoke. In addition, the OAuth token may have field "partially authorized" added thereto according to the third pre-configuration (B3).

In step 6, the API exposing function may verify the OAuth token so as to primarily identify whether the corresponding API invoker is authorized to invoke an API. If the API invoker has invoked an API that requires the user's authorization (this may be recognized by the third pre-configuration), the API exposing function may identify whether the invocation includes Token_Auz which includes the user's authorization information. If the API invoker has sent no Token_Auz in connection with invoking an API that requires the user's authorization, or if the API invoker has sent the same including invalid Token_Auz, the API exposing function may reject the API invocation request. If the API invoker has sent the Token_Auz, the API exposing function may transmit a token verification request to the authorization function through CAPIF-9 interface. The process in which the API invoker searches for the authorization function may be performed based on authorization function information included in the Token_Auz.

In step 7, if the authorization function has no K_Auz that matches with the Auz-KID in the Token_Auz claim, the authorization function may request the AUSF to provide the K_Auz. The authorization function may use a Nausf_ AuthorizationKey_Get Request service in this regard, and may use the Auz-KID as an input value. The authorization function may find the AUSF by using the Auz-KID by means of the second pre-configuration (B2). If the API exposing function is outside the PLMN trust domain, the authorization function may transmit a GPSI request indication together with the K_Auz request.

In step 8, the AUSF may transmit the K_Auz and the UE ID (which may include SUPI and, selectively, GPSI) to the authorization function in response to the Nausf_AuthorizationKey_Get request.

In step 9, the authorization function may store the K_Auz and UE ID received from the AUSF together with the Auz-KID. In case that a token verification request is later received from the API exposing function, and in case that the Auz-KID in the token claim is stored therein, the authorization function may verify the token by using the key (K_Auz) that matches therewith. In such a case, the authorization function may have no need to send a K_Auz key request to the AUSF.

In step 10, the authorization function may verify the token by using the K_Auz that matches with the Auz-KID in the token claim.

In step 11, the authorization function may transmit a token verification response to the API exposing function. If the verification is successful, the authorization function may also transmit the UE's ID (SUPI or GPSI) which may be used in a 3GPP system.

In step 12, if the API exposing function has received a token verification success response, the same may store the K_Auz together with the UE's ID which may be used in a 3GPP system. The UE ID may further include the UE's ID received from the API invoker in step 5. Thereafter, in case that the API exposing function has received an API invocation request including the corresponding Token_Auz from the API invoker, the API exposing function may perform an API invocation response, based on the stored Token_Auz, without sending a token verification request to the authorization function.

In step 13, the API exposing function may transmit an API invocation response to the API invoker according to whether the token verification is successful or not. The transmitted response may include a UE's ID such that the API invoker finds an appropriate UE. The UE's ID may be the UE ID of the application layer received in step 5, or may be GPSI or SUPI.

In step 14, if the user wants to revoke already authorized information, the user may revoke the same through the resource owner client. The resource owner client may store information which the user has authorized through the UE, and the user may revoke authorized information through the corresponding client (for example, such a process may be performed by the user's determination to select "revoke" through the resource owner client). If the user has requested revocation through the resource owner client, the UE may generate a revocation token (Token_Rev). The revocation token's claim may include information such as the API name, Auz-KID, the API invoker's information, "not authorized," and time of generation. Token verification information may be generated by using the token's claim and K_Auz as input values similarly to step 3.

In step 15, the generated Token_Rev may be transferred from the UE's resource owner client to the authorization function. CAPIF-8 interface may be used in this case.

In step 16, the authorization function may verify the Token_Rev by using the K_Auz. In case that the authorization function has no K_Auz that matches with the Auz-KID included in the Token_Rev, the key and UE ID may be received from the AUSF in the same method as in step 7 and step 8.

In step 17, the authorization function may transfer the token verification result to the API exposing function. The revocation notification transmitted by the authorization function may include the UE's ID (SUPI or GPSI) which may be used to determine the UE in the 3GPP system.

In step 18, in case that the API exposing function has received a Token_Rev from the authorization function, the API exposing function may revoke the Token_Auz stored in step 12. The API exposing function may find the Token_Auz stored in step 12 solely in connection with information such as the UE ID received in step 17, the API name in Token_Rev, and information of the API invoker. After finding the Token_Auz, the API exposing function may compare the token generation time included in the Token_Auz and that included in the Token_Rev. If the Token_Auz has been generated prior to the Token_Rev, the API exposing function may revoke the Token_Auz. If the Token_Rev has been generated prior to the Token_Auz, the API exposing function may not revoke the Token_Auz. If the Token_Auz has been revoked, the API exposing function may delete the Token_Auz and may store the Token_Rev together with the UE ID. If the API invoker requests an API invocation by using the Token_Auz generated prior to the Token_Rev stored in the API exposing function, the API exposing function may indicate that the Token_Auz is invalid and may reject the API invocation request.

In step 19, the API exposing function may notify the API invoker of token revocation. The token revocation notification from the API exposing function may include the UE's ID received from the API invoker received in step 5. Upon receiving the token revocation notification, the API invoker should not use the previously generated Token_Auz, and may perform steps 1-13 described with reference to FIG. 3 if a later API invocation is necessary.

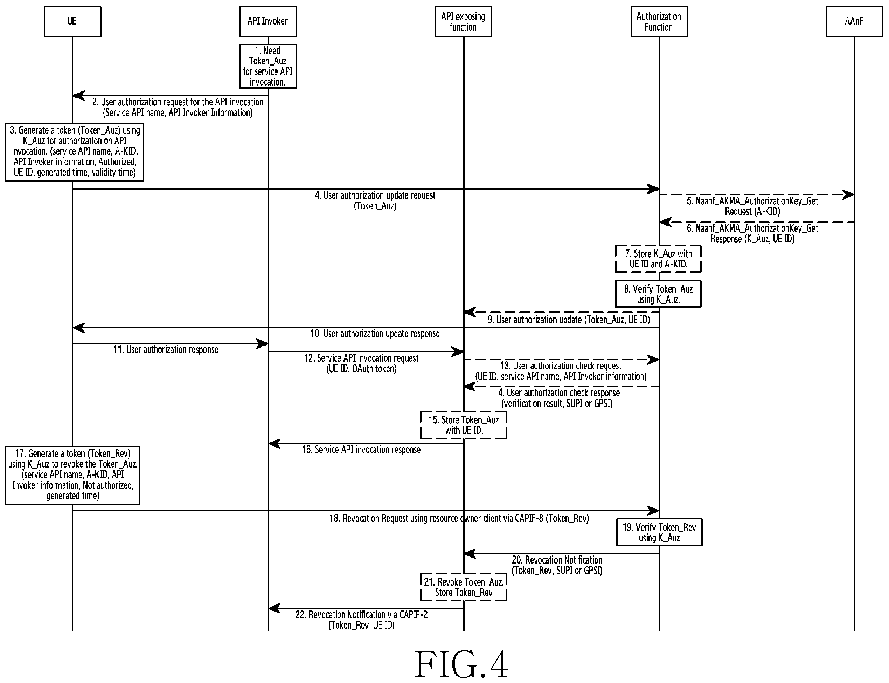

FIG. 4 is a flowchart illustrating processes in which a user provides or revokes agreement information according to an embodiment of the present disclosure.

For the procedure illustrated in FIG. 4, at least one of the following configurations may be performed in advance.

### First pre-configuration (C1)

Information needed by the user to access the authorization function through the resource owner client of the UE (the information may include, for example, the authorization function's address, information for forming secure communication with the authorization function, and the like) may be provided to the UE in advance (for example, there may be a method in which the information is provided to the UE during a registration process, or the operator provides the information in the USIM in advance).

### Second pre-configuration (C2)

The API invoker may know in advance whether the user's authorization information is necessary when invoking a specific API. For example, the API invoker may be informed by an API provider operator whether the user's authorization information is necessary when invoking a specific API when making a contract with the API provider operator, and field "partially authorized" may be added to an OAuth token provided by the CAPIF core function such that the API invoker knows that the user's authorization information is necessary if an API that the API invoker wants to invoke is in the OAuth token's field "partially authorized."

Referring to FIG. 4, in step 1, the API invoker may know that the user's authorization information is necessary to invoke an API by means of the second pre-configuration (C2).

In step 2, the API invoker may transmit a user authorization request regarding the corresponding API invocation, which includes the name of the API to be invoked and information of the API invoker (which may be, for example, an ID indicating the API invoker), to the UE.

In step 3, the UE which has received the user authorization request may output corresponding content of the UI of the UE or the UI of the application, and the user may determine whether or not to authorize the content. If the user has authorized, the UE may generate an authorization token (Token_Auz) by using an authorization key (K_Auz). The detailed method for calculating K_Auz will be described later with reference to FIG. 7. The token's claim may include at least one from among the name of the API to be invoked, information of the API invoker, AKMA key identifier (A-KID), "authorization," the time of generation of the token, or the token's validity time. The UE may generate token verification information by using the token's claims and K_Auz as input values. The token verification information may be information such as signature information or a message authentication code. If the UE has generated a token according to the user's authorization, the UE may transmit necessary information such as the API name and information of the API invoker to the resource owner client, and the resource owner client may store such information.

In step 4, the UE may transfer the Token_Auz to the authorization function so as to request user authorization information update.

In step 5, if the authorization function has no K_Auz that matches with the A-KID in the Token_Auz claim, the authorization function may request the AAnF to provide the K_Auz. The authorization function may use a Naanf_AKMA_AuthorizationKey_Get request service in this regard, and may use the A-KID as an input value. The authorization function may find the AAnF by using the A-KID. If the API exposing function is outside the PLMN trust domain, the authorization function may transmit a GPSI request indication together with the K_Auz request.

In step 6, the AAnF may transmit the K_Auz and the UE ID (which may include SUPI and, selectively, GPSI) to the authorization function in response to the Naanf_AKMA_AuthorizationKey_Get request.

In step 7, the authorization function may store the K_Auz and UE ID received from the AAnF together with the A-KID. In case that a token verification request is later received from the API exposing function, and in case that the A-KID in the token claim is stored therein, the authorization function may verify the token by using the key (K_Auz) that matches therewith. In such a case, the authorization function may have no need to send a K_Auz key request to the AAnF.

In step 8, the authorization function may verify the token by using the K_Auz that matches with the A-KID in the token claim. The Token_Auz may be stored if the verification is successful.

In step 9, if the verification is successful, the authorization function may send the Token_Auz and UE ID to the API exposing function with regard to the corresponding token. The API exposing function may store the UE's ID and the Token_Auz together. Thereafter, in case that the API exposing function has received an API invocation request including the corresponding Token_Auz from the API invoker, the API exposing function may perform an API invocation response, based on the stored Token_Auz, without sending a token verification request to the authorization function.

In step 10, the authorization function may transmit a user authorization update response to the UE.

In step 11, the UE may transmit a response to the user authorization request of the API invoker in step 2.

In step 12, if the API invoker has received an authorization response from the UE, the API invoker may transmit an API invocation request together with the UE IE and OAuth token.

In step 13, in case that the API exposing function has no authorization information regarding the UE ID and the API name invoked by the API invoker, the API exposing function may request the authorization function to provide user authorization information. The API exposing function may recognize whether the corresponding API needs user authorization by means of the second pre-configuration (C2). The request regarding user authorization information may include the UE's ID, the API name which the API invoker wants to invoke, information of the API invoker, and the like.

In step 14, the authorization function may search for a token that matches with the UE's ID received in step 13, information of the API invoker, or the API name which the API invoker wants to invoke. If there is a Token_Auz, the authorization function may transfer the UE's ID and a response indicating that there is user authorization to the API exposing function. If there is no Token_Auz, the authorization function may transfer the UE's ID and a response indicating that there is no user authorization to the API exposing function.

In step 15, in case that the API exposing function has received a token verification success response, the same may store the Token_Auz together with the UE's ID which may be used in a 3GPP system. Thereafter, in case that the API exposing function has received an API invocation request including the corresponding Token_Auz from the API invoker, the API exposing function may perform an API invocation response, based on the stored Token_Auz, without sending a token verification request to the authorization function.

In step 16, the API exposing function may transmit an API invocation response to the API invoker according to whether the token verification is successful or not. The response transmitted by the API exposing function may include a UE's ID such that the API invoker finds an appropriate UE. The UE's ID may be the UE ID of the application layer, or may be GPSI or SUPI.

In step 17, if the user wants to revoke already authorized information, the user may revoke the same through the resource owner client. The resource owner client may store information which the user has authorized through the UE in step 3, and the user may revoke authorized information through the corresponding client (for example, such a process may be performed by the user's determination to select "revoke" through the resource owner client). If the user has requested revocation through the resource owner client, the UE may generate a revocation token (Token_Rev). The revocation token's claim may include information such as the API name, A-KID, the API invoker's information, "not authorized," and time of generation. Token verification information may be generated by using the token's claim and K_Auz as input values similarly to step 3.

In step 18, the generated Token_Rev may be transferred from the UE's resource owner client to the authorization function. CAPIF-8 interface may be used in this case.

In step 19, the authorization function may verify the Token_Rev by using the K_Auz. In case that the authorization function has no K_Auz that matches with the A-KID included in the Token_Rev, the key and UE ID may be received from the AAnF in the same method as in step 5 and step 6.

In step 20, the authorization function may transfer the token verification result to the API exposing function. The revocation notification transmitted by the authorization function may include the UE's ID (SUPI or GPSI) which may be used to determine the UE in the 3GPP system.

In step 21, in case that the API exposing function has received a Token_Rev from the authorization function, the API exposing function may revoke the Token_Auz stored in step 9 or 15. The API exposing function may find the Token_Auz stored in step 9 or 15 solely in connection with information such as the UE ID received in step 20, the API name in Token_Rev, and information of the API invoker. After finding the Token_Auz, the API exposing function may compare the token generation time included in the Token_Auz and that included in the Token_Rev. If the Token_Auz has been generated prior to the Token_Rev, the API exposing function may revoke the Token_Auz. If the Token_Rev has been generated prior to the Token_Auz, the API exposing function may not revoke the Token_Auz. If the Token_Auz has been revoked, the API exposing function may delete the Token_Auz and may store the Token_Rev together with the UE ID. If the API invoker requests an API invocation by using the Token_Auz generated prior to the Token_Rev stored in the API exposing function, the API exposing function may indicate that the Token_Auz is invalid and may reject the API invocation request.

In step 22, the API exposing function may notify the API invoker of token revocation. The token revocation notification from the API exposing function may include the UE's ID. Upon receiving the token revocation notification, the API invoker should not use the previously generated Token_Auz, and may perform steps 1-16 described with reference to FIG. 4 if a later API invocation is necessary.

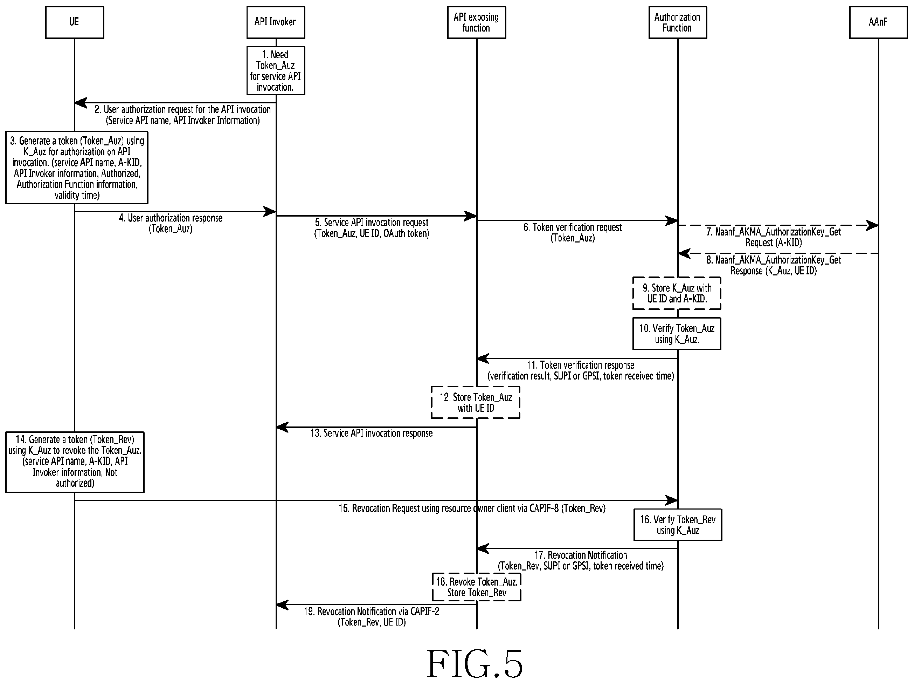

FIG. 5 is a flowchart illustrating processes in which a user provides or revokes agreement information according to an embodiment of the present disclosure.

For the procedure illustrated in FIG. 5, at least one of the following configurations may be performed in advance.

### First pre-configuration (D1)

Information needed by the user to access the authorization function through the resource owner client of the UE (the information may include, for example, the authorization function's address, information for forming secure communication with the authorization function, and the like) may be provided to the UE in advance (for example, there may be a method in which the information is provided to the UE during a registration process, or the operator provides the information in the USIM in advance).

### Second pre-configuration (D2)

The API invoker may know in advance whether the user's authorization information is necessary when invoking a specific API. For example, the API invoker may be informed by an API provider operator whether the user's authorization information is necessary when invoking a specific API when making a contract with the API provider operator, and field "partially authorized" may be added to an OAuth token provided by the CAPIF core function such that the API invoker knows that the user's authorization information is necessary if an API that the API invoker wants to invoke is in the OAuth token's field "partially authorized."

Referring to FIG. 5, in step 1, the API invoker may know that the user's authorization information is necessary to invoke an API by means of the second pre-configuration (D2).

In step 2, the API invoker may transmit a user authorization request regarding the corresponding API invocation, which includes the name of the API to be invoked and information of the API invoker (which may be, for example, an ID indicating the API invoker), to the UE.

In step 3, the UE which has received the user authorization request may output corresponding content of the UI of the UE or the UI of the application, and the user may determine whether or not to authorize the content. If the user has authorized, the UE may generate an authorization token (Token_Auz) by using an authorization key (K_Auz). The detailed method for calculating K_Auz will be described later with reference to FIG. 7. The token's claim may include at least one from among the name of the API to be invoked, information of the API invoker, AKMA key identifier (A-KID), "authorization," the token's validity time, or information of the authorization request (which may include, for example, the address of the authorization request). The UE may generate token verification information by using the token's claims and K_Auz as input values. The token verification information may be information such as signature information or a message authentication code. If the UE has generated a token according to the user's authorization, the UE may transmit necessary information such as the API name and information of the API invoker to the resource owner client, and the resource owner client may store such information.

In step 4, if the UE has generated Token_Auz according to the user's authorization in step 3, the UE may transmit the Token_Auz to the API invoker in response to the request of the API invoker in step 2. If the UE has not generated Token_Auz in step 3 due to the absence of the user's authorization, the UE may transmit a message or information for rejecting the request.

In step 5, the API invoker may present Token_Auz, the UE's ID (the UE's ID may be a UE ID on the application layer, a GPSI, or a (SUPI), or OAuth token so as to transmit an API invocation request to the API exposing function. The OAuth token is a token provided from the CAPIF core function to the API invoker, and may include API information indicating that the corresponding API invoker has been authorized to invoke. In addition, the OAuth token may have field "partially authorized" added thereto according to the second pre-configuration (D2).

In step 6, the API exposing function may verify the OAuth token so as to primarily identify whether the corresponding API invoker is authorized to invoke an API. If the API invoker has invoked an API that requires the user's authorization (this may be recognized by the second pre-configuration), the API exposing function may identify whether the invocation includes Token_Auz which includes the user's authorization information. If the API invoker has sent no Token_Auz in connection with invoking an API that requires the user's authorization, or if the API invoker has sent the same including invalid Token_Auz, the API exposing function may reject the API invocation request. If the API invoker has sent the Token_Auz, the API exposing function may transmit a token verification request to the authorization function through CAPIF-9 interface. The process in which the API invoker searches for the authorization function may be performed based on authorization function information included in the Token_Auz.

In step 7, if the authorization function has no K_Auz that matches with the A-KID in the Token_Auz claim, the authorization function may request the AAnF to provide the K_Auz. The authorization function may use a Naanf_AKMA_AuthorizationKey_Get request service in this regard, and may use the A-KID as an input value. The authorization function may find the AAnF by using the A-KID. If the API exposing function is outside the PLMN trust domain, the authorization function may transmit a GPSI request indication together with the K_Auz request.

In step 8, the AAnF may transmit the K_Auz and the UE ID (which may include SUPI and, selectively, GPSI) to the authorization function in response to the Naanf_AKMA_AuthorizationKey_Get request.

In step 9, the authorization function may store the K_Auz and UE ID received from the AAnF together with the A-KID. In case that a token verification request is later received from the API exposing function, and in case that the A-KID in the token claim is stored therein, the authorization function may verify the token by using the key (K_Auz) that matches therewith. In such a case, the authorization function may have no need to send a K_Auz key request to the AAnF.

In step 10, the authorization function may verify the token by using the K_Auz that matches with the A-KID in the token claim.

In step 11, the authorization function may transmit a token verification response to the API exposing function. If the verification is successful, the authorization function may also transmit the UE's ID (SUPI or GPSI) which may be used in a 3GPP system. When the Token_Auz is transferred to the API exposing function, the time at which the authorization function has received the Token_Auz in step 6 may be sent together.

In step 12, if the API exposing function has received a token verification success response, the same may store the K_Auz together with the UE's ID which may be used in a 3GPP system. The UE ID may further include the UE's ID received from the API invoker in step 5. Thereafter, in case that the API exposing function has received an API invocation request including the corresponding Token_Auz from the API invoker, the API exposing function may perform an API invocation response, based on the stored Token_Auz, without sending a token verification request to the authorization function.

In step 13, the API exposing function may transmit an API invocation response to the API invoker according to whether the token verification is successful or not. The transmitted response may include a UE's ID such that the API invoker finds an appropriate UE. The UE's ID may be the UE ID of the application layer received in step 5, or may be GPSI or SUPI.

In step 14, if the user wants to revoke already authorized information, the user may revoke the same through the resource owner client. The resource owner client may store information which the user has authorized through the UE in step 3, and the user may revoke authorized information through the corresponding client (for example, such a process may be performed by the user's determination to select "revoke" through the resource owner client). If the user has requested revocation through the resource owner client, the UE may generate a revocation token (Token_Rev). The revocation token's claim may include information such as the API name, A-KID, the API invoker's information, "not authorized," and time of generation. Token verification information may be generated by using the token's claim and K_Auz as input values similarly to step 3.

In step 15, the generated Token_Rev may be transferred from the UE's resource owner client to the authorization function. CAPIF-8 interface may be used in this case.

In step 16, the authorization function may verify the Token_Rev by using the K_Auz. In case that the authorization function has no K_Auz that matches with the A-KID included in the Token_Rev, the key and UE ID may be received from the AAnF in the same method as in step 7 and step 8.

In step 17, the authorization function may transfer the token verification result to the API exposing function. The revocation notification transmitted by the authorization function may include the UE's ID (SUPI or GPSI) which may be used to determine the UE in the 3GPP system, or the time at which the Token_Rev has been received in step 15.

In step 18, in case that the API exposing function has received a Token_Rev from the authorization function, the API exposing function may revoke the Token_Auz stored in step 12. The API exposing function may find the Token_Auz stored in step 12 solely in connection with information such as the UE ID received in step 17, the API name in Token_Rev, and information of the API invoker. After finding the Token_Auz, the API exposing function may compare the token received time received in step 11 and the token received time received in step 17. If the time comparison indicates that the Token_Auz has been generated prior to the Token_Rev, the API exposing function may revoke the Token_Auz. If the time comparison indicates that the Token_Rev has been generated prior to the Token_Auz, the API exposing function may not revoke the Token_Auz. If the Token_Auz has been revoked, the API exposing function may delete the Token_Auz and may store the Token_Rev together with the UE ID. If the API invoker requests an API invocation by using the Token_Auz generated prior to the Token_Rev stored in the API exposing function, the API exposing function may indicate that the Token_Auz is invalid and may reject the API invocation request.

In step 19, the API exposing function may notify the API invoker of token revocation. The token revocation notification from the API exposing function may include the UE's ID received from the API invoker received in step 5. Upon receiving the token revocation notification, the API invoker should not use the previously generated Token_Auz, and may perform steps 1-13 described with reference to FIG. 5 if a later API invocation is necessary.

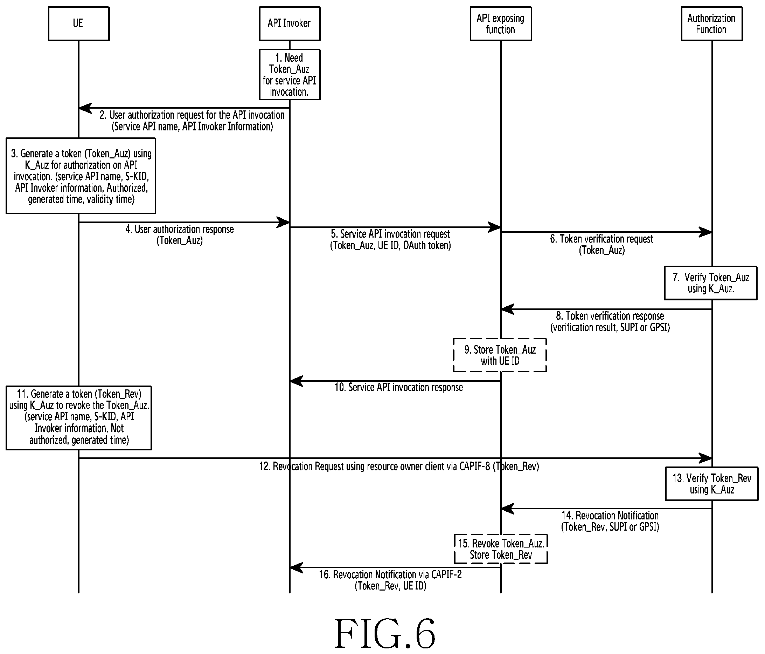

FIG. 6 is a flowchart illustrating processes in which a user provides or revokes agreement information according to an embodiment of the present disclosure.

For the procedure illustrated in FIG. 6, at least one of the following configurations may be performed in advance.

### First pre-configuration (E1)

During the UE's authentication process, the AUSF may receive a routing indicator regarding the authorization function supposed to verify the Token_Auz from a network entity such as UDM.

### Second pre-configuration (E2)

After the authentication process is completed, the UE and AUSF may generate a K_Auz from the K_AUSF, and may generate a SNAAPPY key identifier (S-KID) from the SUPI, routing indicator, and home network identifier. For example, the S-KID may take a network access identifier (NAI) format (that is, username@realm). In such an example, the "username" portion may be configured by a routing indicator, a SNAAPPY temporary UE identifier (S-TID) (which may serve as a temporary ID of the UE) generated by using the SUPI/K_AUSF or the like as an input, and the like, and the "realm" portion may be configured by a home network identifier and the like. The AUSF may transmit information such as the K_Auz, S-KID, and SUPI to the authorization function.

### Third pre-configuration (E3)

Information needed by the user to access the authorization function through the resource owner client of the UE (the information may include, for example, the authorization function's address, information for forming secure communication with the authorization function, and the like) may be provided to the UE in advance (for example, there may be a method in which the information is provided to the UE during a registration process, or the operator provides the information in the USIM in advance).

### Fourth pre-configuration (E4)

The API invoker may know in advance whether the user's authorization information is necessary when invoking a specific API. For example, the API invoker may be informed by an API provider operator whether the user's authorization information is necessary when invoking a specific API when making a contract with the API provider operator, and field "partially authorized" may be added to an OAuth token provided by the CAPIF core function such that the API invoker knows that the user's authorization information is necessary if an API that the API invoker wants to invoke is in the OAuth token's field "partially authorized."

Referring to FIG. 6, in step 1, the API invoker may know that the user's authorization information is necessary to invoke an API by means of the fourth pre-configuration (E4).

In step 2, the API invoker may transmit a user authorization request regarding the corresponding API invocation, which includes the name of the API to be invoked and information of the API invoker (which may be, for example, an ID indicating the API invoker), to the UE.

In step 3, the UE which has received the user authorization request may output corresponding content of the UI of the UE or the UI of the application, and the user may determine whether or not to authorize the content. If the user has authorized, the UE may generate an authorization token (Token_Auz) by using an authorization key (K_Auz). The detailed method for calculating K_Auz will be described later with reference to FIG. 7. The token's claim may include at least one from among the name of the API to be invoked, information of the API invoker, the SNAAPPY key identifier (S-KID), "authorization," the time of generation of the token, or the token's validity time. The UE may generate token verification information by using the token's claims and K_Auz as input values. The token verification information may be information such as signature information or a message authentication code. If the UE has generated a token according to the user's authorization, the UE may transmit necessary information such as the API name and information of the API invoker to the resource owner client, and the resource owner client may store such information.

In step 4, if the UE has generated Token_Auz according to the user's authorization in step 3, the UE may transmit the Token_Auz to the API invoker in response to the request of the API invoker in step 2. If the UE has not generated Token_Auz in step 3 due to the absence of the user's authorization, the UE may transmit a message or information for rejecting the request.

In step 5, the API invoker may present Token_Auz, the UE's ID (the UE's ID may be a UE ID on the application layer, a generic public subscription identifier (GPSI), or a subscription permanent identifier (SUPI)), or OAuth token so as to transmit an API invocation request to the API exposing function. The OAuth token is a token provided from the CAPIF core function to the API invoker, and may include API information indicating that the corresponding API invoker has been authorized to invoke. In addition, the OAuth token may have field "partially authorized" added thereto according to the fourth pre-configuration (E4).

In step 6, the API exposing function may verify the OAuth token so as to primarily identify whether the corresponding API invoker is authorized to invoke an API. If the API invoker has invoked an API that requires the user's authorization (this may be recognized by the fourth pre-configuration (E4)), the API exposing function may identify whether the invocation includes Token_Auz which includes the user's authorization information. If the API invoker has sent no Token_Auz in connection with invoking an API that requires the user's authorization, or if the API invoker has sent the same including invalid Token_Auz, the API exposing function may reject the API invocation request. If the API invoker has sent the Token_Auz, the API exposing function may transmit a token verification request to the authorization function through CAPIF-9 interface. The process in which the API invoker searches for the authorization function may be based on routing indicator information of the S-KID in the Token_Auz.

In step 7, the authorization function may search for the K_Auz which is necessary for token verification, based on the S-KID included in the Token_Auz. The authorization function may receive the K_Auz from the ASUF according to the second pre-configuration (E2) and then store the same. The authorization function may verify the token by using the K_Auz which matches with the S-KID in the token claim.

In step 8, the authorization function may transmit a token verification response to the API exposing function. If the verification is successful, the authorization function may also transmit the UE's ID (SUPI or GPSI) which may be used in a 3GPP system.

In step 9, if the API exposing function has received a token verification success response, the same may store the K_Auz together with the UE's ID which may be used in a 3GPP system. The UE ID may further include the UE's ID received from the API invoker in step 5. Thereafter, in case that the API exposing function has received an API invocation request including the corresponding Token_Auz from the API invoker, the API exposing function may perform an API invocation response, based on the stored Token_Auz, without sending a token verification request to the authorization function.

In step 10, the API exposing function may transmit an API invocation response to the API invoker according to whether the token verification is successful or not. The transmitted response may include a UE's ID such that the API invoker finds an appropriate UE. The UE's ID may be the UE ID of the application layer received in step 5, or may be GPSI or SUPI.

In step 11, if the user wants to revoke already authorized information, the user may revoke the information through the resource owner client. The resource owner client may store information which the user has authorized through the UE in step 3, and the user may revoke authorized information through the corresponding client (for example, such a process may be performed by the user's determination to select "revoke" through the resource owner client). If the user has requested revocation through the resource owner client, the UE may generate a revocation token (Token_Rev). The revocation token's claim may include information such as the API name, A-KID, the API invoker's information, "not authorized," and time of generation. Token verification information may be generated by using the token's claim and K_Auz as input values similarly to step 3.

In step 12, the generated Token_Rev may be transferred from the UE's resource owner client to the authorization function. CAPIF-8 interface may be used in this case.

In step 13, the authorization function may verify the Token_Rev by using the K_Auz.

In step 14, the authorization function may transfer the token verification result to the API exposing function. The revocation notification transmitted by the authorization function may include the UE's ID (SUPI or GPSI) which may be used to determine the UE in the 3GPP system.

In step 15, in case that the API exposing function has received a Token_Rev from the authorization function, the API exposing function may revoke the Token_Auz stored in step 9. The API exposing function may find the Token_Auz stored in step 9 solely in connection with information such as the UE ID received in step 14, the API name in Token_Rev, and information of the API invoker. After finding the Token_Auz, the API exposing function may compare the token generation time included in the Token_Auz and that included in the Token_Rev. If the Token_Auz has been generated prior to the Token_Rev, the API exposing function may revoke the Token_Auz. If the Token_Rev has been generated prior to the Token_Auz, the API exposing function may not revoke the Token_Auz. If the Token_Auz has been revoked, the API exposing function may delete the Token_Auz and may store the Token_Rev together with the UE ID. If the API invoker requests an API invocation by using the Token_Auz generated prior to the Token_Rev stored in the API exposing function, the API exposing function may indicate that the Token_Auz is invalid and may reject the API invocation request.

In step 16, the API exposing function may notify the API invoker of token revocation. The token revocation notification from the API exposing function may include the UE's ID received from the API invoker received in step 5. Upon receiving the token revocation notification, the API invoker should not use the previously generated Token_Auz, and may perform steps 1-12 described with reference to FIG. 6 if a later API invocation is necessary.

FIG. 7 illustrates an example of a process of calculating a key used to generate a token used to manage the user's authorization according to an embodiment of the present disclosure.

In case that the K_AUSF generates an encryption key for identifying the user's authorization according to an embodiment of the present disclosure, the UE or ASUF may generate a K_Auz for generating an encryption key for user authorization by inputting the K_AUSF and UE's ID (for example, GPSI or SUPI) or a constant (for example, character string "authorization") indicating a predetermined input value to a specific key derivation function promised between the UE and the mobile communication system.

Alternatively, the UE and ASUF may generate the K_Auz by using the previously explained input value from a K_AKMA generated from the K_AUSF.

In addition, in case that the encryption key for user authorization needs to be regenerated to manage periods such as the validity period of the K_Auz, the UE and AUSF/AAnF may define a variable which configures information of a counter for generating a separate K_Auz or a different input value such that a key different from the existing K_Auz is generated, and may use the same to generate the K_Auz. The variable which configures the counter or a different input value may be determined/input in a method promised in advance between the UE and AUSF/AAnF such that a different input value is provided each time the K_Auz is generated, or the input value may be shared in advance between the UE and AUSF/AAnF.

In addition, in case that an encryption key for privacy identification needs to be regenerated to manage periods such as the validity period of the K_Privacy_AF, the UE and AUSF may define a variable which configures information of a counter for generating a separate K_Privacy_AF or a different input value such that a K_Privacy_AF different from the existing K_Privacy_AF is generated, and may use the same to generate the K_Privacy_AF. The variable which configures the counter or a different input value may be determined/input in a method promised in advance between the UE and AUSF such that a different input value is provided each time the K_Privacy_AF is generated, or the input value may be shared in advance between the UE and AUSF.

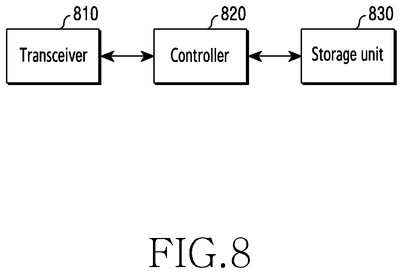

FIG. 8 illustrates a structure of a base station according to an embodiment of the disclosure.

Referring to FIG. 8, the base station may include a transceiver 810, a controller 820, and a storage 830. The transceiver 810, the controller 820, and the storage 830 may be operated according to the above-described communication methods of the base station. A network device may also correspond to the structure of the base station. However, components of the base station are not limited to the above-described example. For example, the base station may include a larger or smaller number of components than the above-described components. For example, the base station may include the transceiver 810 and the controller 820. Furthermore, the transceiver 810, the controller 820, and the storage 830 may be implemented in the form of a single chip.

The transceiver 810 refers to a base station receiver and a base station transmitter as a whole, and may transmit/receive signals with the UE, other base stations, and other network devices. The transmitted/received signals may include control information and data. The transceiver 810 may transmit, for example, system information, synchronization signals, or reference signals to the UE. To this end, the transceiver 810 may include an RF transmitter configured to up-convert and amplify the frequency of transmitted signals, an RF receiver configured to low-noise-amplify received signals and down-convert the frequency thereof, and the like. However, this is only an embodiment of the transceiver 810, and the components of the transceiver 810 are not limited to the RF transmitter and the RF receiver. The transceiver 810 may include wired/wireless transceivers, and may include various components for transmitting/receiving signals. In addition, the transceiver 810 may receive signals through a communication channel (e.g., a radio channel), output the same to the controller 820, and transmit signals output from the controller 820 through the communication channel. Furthermore, the transceiver 810 may receive communication signals, output same to a processor, and transmit signals output from the processor to the UE, other base stations, or other network entities through a wired/wireless network.

The storage 830 may store programs and data necessary for operations of the base station. In addition, the storage 830 may store control information or data included in signals acquired by the base station. The memory 830 may include storage media such as a ROM, a RAM, a hard disk, a CD-ROM, and a DVD, or a combination of storage media. In addition, the storage 830 may store at least one of information transmitted/received through the transceiver 810 and information generated through the controller 820.

As used herein, the controller 820 may be defined as a circuit, an application specific integrated circuit, or at least one processor. The processor may include a communication processor (CP) which performs control for communication and an application processor (AP) which controls upper layers such as application programs. The controller 820 may control the overall operation of the base station according to the embodiments proposed in the disclosure. For example, the controller 820 may control signal flows between the respective blocks to perform operations according to the above-described flowcharts.

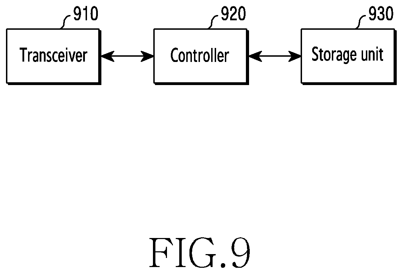

FIG. 9 illustrates a structure of a UE according to an embodiment of the disclosure.

Referring to FIG. 9, the UE may include a transceiver 910, a controller 920, and a storage 930. The transceiver 910, the controller 920, and the storage 930 may be operated according to the above-described communication methods of the UE. However, components of the UE are not limited to the above-described example. For example, the UE may include a larger or smaller number of components than the above-described components. For example, the UE may include the transceiver 910 and the controller 920. Furthermore, the transceiver 910, the controller 920, and the storage 930 may be implemented in the form of a single chip.

The transceiver 910 refers to a UE receiver and a UE transmitter as a whole, and may transmit/receive signals with a base station and any other UE or network entity. The signals transmitted/received with the base station may include control information and data. The transceiver 910 may receive, for example, system information, synchronization signals, or reference signals from the base station. To this end, the transceiver 910 may include an RF transmitter configured to up-convert and amplify the frequency of transmitted signals, an RF receiver configured to low-noise-amplify received signals and down-convert the frequency thereof, and the like. However, this is only an embodiment of the transceiver 910, and the components of the transceiver 910 are not limited to the RF transmitter and the RF receiver. Also, the transceiver 910 may include wired/wireless transceivers, and may include various components for transmitting/receiving signals. In addition, the transceiver 910 may receive signals through a radio channel, output the same to the controller 920, and transmit signals output from the controller 920 through the radio channel. Furthermore, the transceiver 910 may receive communication signals, output same to a processor, and transmit signals output from the processor to a network entity through a wired/wireless network.

The storage 930 may store programs and data necessary for operations of the UE. In addition, the storage 930 may store control information or data included in signals acquired by the UE. The storage 930 may include storage media such as a ROM, a RAM, a hard disk, a CD-ROM, and a DVD, or a combination of storage media.

As used herein, the controller 920 may be defined as a circuit, an application specific integrated circuit, or at least one processor. The processor may include a communication processor (CP) which performs control for communication and an application processor (AP) which controls upper layers such as application programs. The controller 920 may control the overall operation of the UE according to the embodiments proposed in the disclosure. For example, the controller 920 may control signal flows between the respective blocks to perform operations according to the above-described flowcharts.

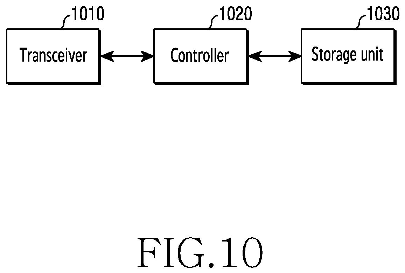

FIG. 9 illustrates a structure of a network entity (or network function) according to an embodiment of the disclosure. The network entity (or network function) illustrated in FIG. 10 may represent an exemplary structure of the API invoker, API exposing function, authorization function, AAnF, AUSF, or the like described above in FIGS, 1 to 6, and the structure illustrated in FIG. 10 may also be applied to any network entity (or network function) other than the network entity (or network function) described above in FIGS. 1 to 6.

Referring to FIG. 10, the network entity (or network function) may include a transceiver 1010, a controller 1020, and a storage 1030. The transceiver 1010, the controller 1020, and the storage 1030 may be operated according to the above-described communication methods of the network entity (or network function). However, components of the network entity (or network function) are not limited to the above-described example. For example, the network entity (or network function) may include a larger or smaller number of components than the above-described components. For example, the network entity (or network function) may include a transceiver 1010 and a controller 1020. Furthermore, the transceiver 1010, the controller 1020, and the storage 1030 may be implemented in the form of a single chip.

The transceiver 1010 refers to a network entity (or network function) receiver and a network entity (or network function) transmitter as a whole, and may transmit/receive signals with a base station, a UE, or any other network entity (or network function). The transceiver 1010 may transmit, to the UE, a signal for requesting a user grant through the base station, or may receive, from the UE, information for notifying of a user grant-related approval or discard through the base station. Also, the transceiver 1010 may include wired/wireless transceivers, and may include various components for transmitting/receiving signals. In addition, the transceiver 1010 may receive signals through a radio channel, output the same to the controller 1020, and transmit signals output from the controller 1020 through the radio channel. Furthermore, the transceiver 1010 may receive communication signals, output same to a processor, and transmit signals output from the processor to a network entity through a wired/wireless network.

The storage 1030 may store programs and data necessary for operations of the network entity (or network function). In addition, the storage 1030 may store control information or data included in signals transmitted/received by the network entity (or network function). The storage 1030 may include storage media such as a ROM, a RAM, a hard disk, a CD-ROM, and a DVD, or a combination of storage media.

As used herein, the controller 1020 may be defined as a circuit, an application specific integrated circuit, or at least one processor. The processor may include a communication processor (CP) which performs control for communication and an application processor (AP) which controls upper layers such as application programs. The controller 1020 may control the overall operation of the network entity (or network function) according to the embodiments proposed in the disclosure. For example, the controller 1020 may control signal flows between the respective blocks to perform operations according to the above-described flowcharts.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims.

## Claims

1. A method performed by a user equipment, UE, in a wireless communication system, the method comprising:
receiving, from a first network entity, a user authentication request for an API invocation;
generating a first token for authentication regarding the API invocation;
transmitting, to the first network entity, the first token in response to the user authentication request;
generating a first revocation token for revoking the first token; and
transmitting, to a second network entity, the first revocation token,
wherein the first revocation token includes information on a generation time of the first revocation token.

2. The method of claim 1, wherein the first token includes at least one of a name of an API, information of the first network entity, a time of generation of the first token, a validity time of the first token, or information of a third network entity.

3. The method of claim 2, wherein the generating of the first token for authentication regarding the API invocation further includes generating first token verification information, based on the first token.

4. The method of claim 1, wherein the first revocation token further includes at least one of a name of an API, or information of the first network entity, and
wherein the generating of the first revocation token further includes generating first revocation token verification information, based on the first revocation token.

5. A method performed by a network entity in a wireless communication system, the method comprising:
receiving, from an API invoker, a first token for authentication regarding an API invocation;
receiving a first revocation token for revocation of the first token; and
revoking the first token, based on the first revocation token,
wherein the first revocation token includes information on a generation time of the first revocation token.

6. The method of claim 5, wherein the revoking of the first token, based on the first revocation token, further comprises searching for the first token, based on information regarding the API invoker or API name information included in the first revocation token.

7. The method of claim 6, wherein the revoking of the first token, based on the first revocation token, further includes comparing a time of generation of the first revocation token and a time of generation of the first token, and
wherein the first token is revoked in case that the time of generation of the first token precedes the time of generation of the first revocation token.

8. The method of claim 5, further comprising:
storing the first revocation token; and
transmitting, to a second network entity, information indicating revocation of the first token.

9. A user equipment, UE, comprising:
at least one transceiver (910);
at least one processor (920) communicatively coupled to the at least one transceiver; and
at least one memory (930), communicatively coupled to the at least one processor, storing instructions executable by the at least one processor individually or in any combination to cause the UE to:
receive, from a first network entity, a user authentication request for an API invocation;
generate a first token for authentication regarding the API invocation;
transmit, to the first network entity, the first token in response to the user authentication request;
generate a first revocation token for revoking the first token; and
transmit, to a second network entity, the first revocation token,
wherein the first revocation token includes information on a generation time of the first revocation token.

10. The UE of claim 9, wherein the first token includes at least one of a name of an API, information of the first network entity, a time of generation of the first token, a validity time of the first token, or information of a third network entity.

11. The UE of claim 10, wherein the generating of the first token for authentication regarding the API invocation further includes generating first token verification information, based on the first token.

12. The UE of claim 9, wherein the first revocation token includes at least one of a name of an API, or information of the first network entity, and
wherein the operation of generating the first revocation token for revoking the first token further includes generating first revocation token verification information, based on the first revocation token.

13. A network entity comprising:
at least one transceiver (810);
at least one processor (820) communicatively coupled to the at least one transceiver; and
at least one memory (830), communicatively coupled to the at least one processor, storing instructions executable by the at least one processor individually or in any combination to cause the network entity to:
receive, from an API invoker, a first token for authentication regarding an API invocation;
receive a first revocation token for revocation of the first token; and
revoke the first token, based on the first revocation token,
wherein the first revocation token includes information on a generation time of the first revocation token.

14. The network entity of claim 13, wherein the revoking of the first token, based on the first revocation token, further includes searching for the first token, based on information regarding the API invoker or API name information included in the first revocation token.

15. The network entity of claim 14, wherein revoking of the first token, based on the first revocation token, further includes comparing a time of generation of the first revocation token and a time of generation of the first token, and
wherein the first token is revoked in case that the time of generation of the first token precedes the time of generation of the first revocation token.

## Patentansprüche

1. Verfahren, das durch ein Benutzergerät, UE, in einem drahtlosen Kommunikationssystem durchgeführt wird, wobei das Verfahren umfasst:
Empfangen einer Benutzerauthentifizierungsanforderung für einen API-Aufruf von einer ersten Netzwerkeinheit;
Erzeugen eines ersten Tokens zur Authentifizierung bezüglich des API-Aufrufs;
Übertragen des ersten Tokens an die erste Netzwerkeinheit als Reaktion auf die Benutzerauthentifizierungsanforderung;
Erzeugen eines ersten Widerrufs-Tokens zum Widerrufen des ersten Tokens; und
Übertragen des ersten Widerrufs-Tokens an eine zweite Netzwerkeinheit,
wobei das erste Widerrufs-Token Informationen über eine Erzeugungszeit des ersten Widerrufs-Tokens enthält.

2. Verfahren nach Anspruch 1, wobei das erste Token mindestens eines von einem Namen einer API, von Informationen über die erste Netzwerkeinheit, einer Erzeugungszeit des ersten Tokens, einer Gültigkeitsdauer des ersten Tokens oder von Informationen über eine dritte Netzwerkeinheit enthält.

3. Verfahren nach Anspruch 2, wobei das Erzeugen des ersten Tokens zur Authentifizierung bezüglich des API-Aufrufs ferner Erzeugen von Informationen zur Verifizierung des ersten Tokens basierend auf dem ersten Token umfasst.

4. Verfahren nach Anspruch 1, wobei das erste Widerrufs-Token ferner mindestens einen von einem Namen einer API oder von Informationen über die erste Netzwerkeinheit enthält, und
wobei das Erzeugen des ersten Widerrufs-Tokens ferner Erzeugen von Verifizierungsinformationen für das erste Widerrufs-Token basierend auf dem ersten Widerrufs-Token umfasst.

5. Verfahren, das durch eine Netzwerkeinheit in einem drahtlosen Kommunikationssystem durchgeführt wird, wobei das Verfahren umfasst:
Empfangen eines ersten Tokens von einer API-Aufrufeinrichtung zur Authentifizierung bezüglich eines API-Aufrufs;
Empfangen eines ersten Widerrufs-Tokens zum Widerruf des ersten Tokens; und
Widerrufen des erste Tokens basierend auf dem ersten Widerrufs-Token,
wobei das erste Widerrufs-Token Informationen über eine Erzeugungszeit des ersten Widerrufs-Tokens enthält.

6. Verfahren nach Anspruch 5, wobei das Widerrufen des ersten Tokens basierend auf dem ersten Widerrufs-Token ferner Suchen nach dem ersten Token basierend auf Informationen bezüglich der API-Aufrufeinrichtung oder von API-Namensinformationen umfasst, die im ersten Widerrufs-Token enthalten sind.

7. Verfahren nach Anspruch 6, wobei das Widerrufen des ersten Tokens basierend auf dem ersten Widerrufs-Token ferner Vergleichen einer Zeit der Erzeugung des ersten Widerrufs-Tokens mit einer Zeit zur Erzeugung des ersten Tokens umfasst, und
wobei das erste Token widerrufen wird, falls die Zeit der Erzeugung des ersten Tokens vor der Zeit der Erzeugung des ersten Widerrufs-Tokens liegt.

8. Verfahren nach Anspruch 5, ferner umfassend:
Speichern des ersten Widerrufs-Tokens; und
Übertragen von Informationen, die den Widerruf des ersten Tokens anzeigen, an eine zweite Netzwerkeinheit.

9. Benutzergerät, UE, umfassend:
mindestens einen Sendeempfänger (910);
mindestens einen Prozessor (920), der kommunikativ mit dem mindestens einen Sendeempfänger gekoppelt ist; und
mindestens einen Speicher (930), der kommunikativ mit dem mindestens einen Prozessor gekoppelt ist und Anweisungen speichert, die durch den mindestens einen Prozessor einzeln oder in beliebiger Kombination ausführbar sind, um das UE zu Folgendem zu veranlassen:
Empfangen einer Benutzerauthentifizierungsanforderung für einen API-Aufruf von einer ersten Netzwerkeinheit;
Erzeugen eines ersten Tokens zur Authentifizierung bezüglich des API-Aufrufs; Übertragen des ersten Tokens an die erste Netzwerkeinheit als Reaktion auf die Benutzerauthentifizierungsanforderung;
Erzeugen eines ersten Widerrufs-Tokens zum Widerrufen des ersten Tokens; und
Übertragen des ersten Widerrufs-Tokens an eine zweite Netzwerkeinheit,
wobei das erste Widerrufs-Token Informationen über eine Erzeugungszeit des ersten Widerrufs-Tokens enthält.

10. UE nach Anspruch 9, wobei das erste Token mindestens eines von einem Namen einer API, von Informationen über die erste Netzwerkeinheit, einer Erzeugungszeit des ersten Tokens, einer Gültigkeitsdauer des ersten Tokens oder von Informationen über eine dritte Netzwerkeinheit enthält.

11. UE nach Anspruch 10, wobei das Erzeugen des ersten Tokens zur Authentifizierung bezüglich des API-Aufrufs ferner Erzeugen von Informationen zur Verifizierung des ersten Tokens basierend auf dem ersten Token umfasst.

12. UE nach Anspruch 9, wobei das erste Widerrufs-Token ferner mindestens einen von einem Namen einer API oder von Informationen über die erste Netzwerkeinheit enthält, und
wobei der Vorgang des Erzeugens des ersten Widerrufs-Tokens zum Widerrufen des ersten Tokens ferner Erzeugen von Verifizierungsinformationen für das erste Widerrufs-Token basierend auf dem ersten Widerrufs-Token umfasst.

13. Netzwerkeinheit, umfassend:
mindestens einen Sendeempfänger (810);
mindestens einen Prozessor (820), der kommunikativ mit dem mindestens einen Sendeempfänger gekoppelt ist; und
mindestens einen Speicher (830), der kommunikativ mit dem mindestens einen Prozessor gekoppelt ist und Anweisungen speichert, die durch den mindestens einen Prozessor einzeln oder in beliebiger Kombination ausführbar sind, um die Netzwerkeinheit zu Folgendem zu veranlassen:
Empfangen eines ersten Tokens von einer API-Aufrufeinrichtung zur Authentifizierung bezüglich eines API-Aufrufs;
Empfangen eines ersten Widerrufs-Tokens zum Widerruf des ersten Tokens; und
Widerrufen des erste Tokens basierend auf dem ersten Widerrufs-Token,
wobei das erste Widerrufs-Token Informationen über eine Erzeugungszeit des ersten Widerrufs-Tokens enthält.

14. Netzwerkeinheit nach Anspruch 13, wobei das Widerrufen des ersten Tokens basierend auf dem ersten Widerrufs-Token ferner Suchen nach dem ersten Token basierend auf Informationen bezüglich der API-Aufrufeinrichtung oder von API-Namensinformationen umfasst, die im ersten Widerrufs-Token enthalten sind.

15. Netzwerkeinheit nach Anspruch 14, wobei das Widerrufen des ersten Tokens basierend auf dem ersten Widerrufs-Token ferner Vergleichen einer Zeit zur Erzeugung des ersten Widerrufs-Tokens mit einer Zeit zur Erzeugung des ersten Tokens umfasst, und
wobei das erste Token widerrufen wird, falls die Zeit der Erzeugung des ersten Tokens vor der Zeit der Erzeugung des ersten Widerrufs-Tokens liegt.

## Revendications

1. Procédé exécuté par un équipement utilisateur, UE, dans un système de communication sans fil, le procédé comprenant :
recevoir, de la part d'une première entité de réseau, une demande d'authentification d'utilisateur pour une invocation d'API ;
générer un premier jeton pour l'authentification relative à l'invocation d'API ;
transmettre, à la première entité de réseau, le premier jeton en réponse à la demande d'authentification d'utilisateur ;
générer un premier jeton de révocation afin de révoquer le premier jeton ; et
transmettre, à une deuxième entité de réseau, le premier jeton de révocation,
dans lequel le premier jeton de révocation comprend des informations relatives à un temps de génération du premier jeton de révocation.

2. Procédé selon la revendication 1, dans lequel le premier jeton comprend au moins l'un parmi un nom d'API, des informations relatives à la première entité de réseau, un temps de génération du premier jeton, un temps de validité du premier jeton ou des informations relatives à une troisième entité de réseau.

3. Procédé selon la revendication 2, dans lequel la génération du premier jeton d'authentification relatif à l'invocation d'API comprend en outre la génération d'informations relatives à la vérification du premier jeton, en se basant sur le premier jeton.

4. Procédé selon la revendication 1, dans lequel le premier jeton de révocation comprend en outre au moins un parmi un nom d'API ou des informations relatives à la première entité de réseau, et
dans lequel la génération du premier jeton de révocation comprend en outre la génération d'informations de vérification du premier jeton de révocation, en se basant sur le premier jeton de révocation.

5. Procédé exécuté par une entité de réseau dans un système de communication sans fil, le procédé comprenant :
recevoir, de la part d'un invocateur d'API, un premier jeton d'authentification relatif à une invocation d'API ;
recevoir un premier jeton de révocation pour la révocation du premier jeton ; et
révoquer le premier jeton, en se basant sur le premier jeton de révocation,
dans lequel le premier jeton de révocation comprend des informations relatives à un temps de génération du premier jeton de révocation.

6. Procédé selon la revendication 5, dans lequel la révocation du premier jeton, en se basant sur le premier jeton de révocation, comprend en outre la recherche du premier jeton, en se basant sur des informations relatives à l'invocation d'API ou sur des informations de nom d'API incluses dans le premier jeton de révocation.

7. Procédé selon la revendication 6, dans lequel la révocation du premier jeton, en se basant sur le premier jeton de révocation, comprend en outre la comparaison entre le temps de génération du premier jeton de révocation et le temps de génération du premier jeton, et
dans lequel le premier jeton est révoqué si le temps de génération du premier jeton est antérieure au temps de génération du premier jeton de révocation.

8. Procédé de la revendication 5, comprenant en outre :
stocker le premier jeton de révocation ; et
transmettre, à une deuxième entité de réseau, des informations indiquant la révocation du premier jeton.

9. Équipement utilisateur, UE, comprenant :
au moins un émetteur-récepteur (910) ;
au moins un processeur (920) couplé de manière communicative à l'au moins un émetteur-récepteur ; et
au moins une mémoire (930), couplée de manière communicative à l'au moins un processeur, stockant des instructions pouvant être exécutées par l'au moins un processeur, individuellement ou selon n'importe quelle combinaison, afin d'amener l'UE à :
recevoir, de la part d'une première entité de réseau, une demande d'authentification d'utilisateur pour une invocation d'API ;
générer un premier jeton pour l'authentification relative à l'invocation d'API ; transmettre, à la première entité de réseau, le premier jeton en réponse à la demande d'authentification d'utilisateur ;
générer un premier jeton de révocation afin de révoquer le premier jeton ; et
transmettre, à une deuxième entité de réseau, le premier jeton de révocation,
dans lequel le premier jeton de révocation comprend des informations relatives à un temps de génération du premier jeton de révocation.

10. UE de la revendication 9, dans lequel le premier jeton comprend au moins l'un parmi un nom d'API, des informations relatives à la première entité de réseau, un temps de génération du premier jeton, un temps de validité du premier jeton ou des informations relatives à une troisième entité de réseau.

11. UE de la revendication 10, dans lequel la génération du premier jeton d'authentification relatif à l'invocation d'API comprend en outre la génération d'informations relatives à la vérification du premier jeton, en se basant sur le premier jeton.

12. UE de la revendication 9, dans lequel le premier jeton de révocation comprend en outre au moins un parmi un nom d'API ou des informations relatives à la première entité de réseau, et
dans lequel l'opération consistant à générer le premier jeton de révocation destiné à révoquer le premier jeton comprend en outre la génération d'informations de vérification du premier jeton de révocation, en se basant sur le premier jeton de révocation.

13. Entité de réseau, comprenant :
au moins un émetteur-récepteur (810) ;
au moins un processeur (820) couplé de manière communicative à l'au moins un émetteur-récepteur ; et
au moins une mémoire (830), couplée de manière communicative à l'au moins un processeur, stockant des instructions exécutables par l'au moins un processeur, individuellement ou selon n'importe quelle combinaison, afin d'amener l'entité de réseau à :
recevoir, de la part d'un invocateur d'API, un premier jeton d'authentification relatif à une invocation d'API ;
recevoir un premier jeton de révocation pour la révocation du premier jeton ; et
révoquer le premier jeton, en se basant sur le premier jeton de révocation,
dans laquelle le premier jeton de révocation comprend des informations relatives à un temps de génération du premier jeton de révocation.

14. Entité de réseau selon la revendication 13, dans laquelle la révocation du premier jeton, en se basant sur le premier jeton de révocation, comprend en outre la recherche du premier jeton, en se basant sur des informations relatives à l'invocation d'API ou sur des informations de nom d'API incluses dans le premier jeton de révocation.

15. Entité de réseau selon la revendication 14, dans laquelle la révocation du premier jeton, en se basant sur le premier jeton de révocation, comprend en outre la comparaison entre le temps de génération du premier jeton de révocation et le temps de génération du premier jeton, et
dans laquelle le premier jeton est révoqué si le temps de génération du premier jeton est antérieure au temps de génération du premier jeton de révocation.
